Europäisches Patentamt

European Patent Office

Office européen des brevets

(19)

(11) Veröffentlichungsnummer : **0 434 659 A2**

## (12) EUROPÄISCHE PATENTANMELDUNG

(21) Anmeldenummer : **90890317.2**

(22) Anmeldetag : **10.12.90**

(51) Int. Cl.$^5$ : **H01M 12/08, H01M 10/42**

(30) Priorität : **19.12.89 AT 2879/89**

(43) Veröffentlichungstag der Anmeldung :
**26.06.91 Patentblatt 91/26**

(84) Benannte Vertragsstaaten :
**BE CH DE DK ES FR GB GR IT LI LU NL SE**

(71) Anmelder : **S.E.A. Studiengesellschaft für
Energiespeicher und Antriebssysteme
Gesellschaft m.b.H.
Bleckmanngasse 10 Postfach 49
A-8680 Mürzzuschlag (AT)**

(72) Erfinder : **Tomazic, Gerd, Dipl.-Ing. Dr.
Hofkirchergasse 4
A-8680 Mürzzuschlag (AT)**
Erfinder : **Trutschl, Karl, Ing.
Pernreitgasse III/6
A-8680 Mürzzuschlag (AT)**

(74) Vertreter : **Widtmann, Georg, Dr.
S.E.A. Studiengesellschaft für
Energiespeicher und Antriebssysteme
Gesellschaft m.b.H. Postfach 49
Bleckmanngasse 10
A-8680 Mürzzuschlag (AT)**

(54) **Verfahren zur gezielten elektrochemischen Umsetzung in galvanischen Zellen sowie wiederaufladbare Batterie.**

(57)    Verfahren und Batterie zur gezielten elektrochemischen Umsetzung in einer Vielzahl von galvanischen Zellen, vorzugsweise mit bipolaren Elektroden einer wiederaufladbaren Batterie, insbesondere Zink-Brom-Batterie, mit zumindest zwei umlaufenden fluiden, insbesondere flüssigen Elektrolyten, welche die Anoden-bzw. Katodenräume, zumindest zeitweise, während der gezielten elektrochemischen Umsetzung durchfließen, wobei vorzugsweise zwischen den gezielten elektrochemischen Umsetzungen die elektrische Verbindung zweiter Klasse zwischen Zellenpaketen, Zellengruppen bzw. einzelnen Zellen über die Elektrolyten unterbrochen wird, wobei mit mehreren, vorzugsweise in Serie geschalteten, Zellen aufgebaute Zellenpakete und/oder Teile derselben, zumindest teilweise während des Ladens parallel und zumindest während des Entladens in Serie umgeschaltet werden.

Fig.2

EP 0 434 659 A2

## VERFAHREN ZUR GEZIELTEN ELEKTROCHEMISCHEN UMSETZUNG IN GALVANISCHEN ZELLEN SOWIE WIEDERAUFLADBARE BATTERIE

Die Erfindung bezieht sich auf ein Verfahren zur gezielten elektrochemischen Umsetzung in einer Vielzahl von galvanischen Zellen, vorzugsweise mit bipolaren Elektroden und auf eine wiederaufladbare Batterie, insbesondere Zink-Brom-Batterie.

Gezielte elektrochemische Umsetzungen in wiederaufladbaren Batterien erfolgen jeweils bei dem Ladevorgang bzw. bei dem Entladen der Batterie über einen Verbraucher, beispielsweise einem Motor od. dgl.

Die Kapazität einer Batterie richtet sich u. a. nach der Menge der Kationen und Anionen, welche für die gezielte elektrochemische Umsetzung zur Verfügung stehen.

Bei der metallischen Abscheidung an den Elektroden ist die Menge durch die Dimension des Elektrodenraumes bestimmt, wohingegen die Menge der Anionen in der Regel durch das Volumen der Elektrolytflüssigkeit bestimmt ist. Um die Menge der Elektrolytflüssigkeit zu erhöhen, können eigene Vorratsbehälter für den Elektrolyten außerhalb der Elektrodenräume vorgesehen werden. Hiebei liegt in der Regel ein eigener Behälter für den Katalyten und ein eigener Behälter für den Anolyten vor. Nachteilig bei umlaufenden Elektrolytsystemen in Batterien ist, daß unerwünschte Ströme über das Kanalsystem der Zu- und Ableitung des Elektrolyten fließen können, wodurch erhebliche Kapazitätsminderungen eintreten. In der EU A1 01 68 377 wird eine Zink-Brom-Batterie vorgeschlagen, bei welcher zumindest während der Stillstandzeiten die elektrische Verbindung innerhalb der Elektrolytkanäle, z. B. durch einen Hahn, welcher geöffnet und geschlossen werden kann, unterbunden wird. Durch eine derartige Vorgangsweise kann eine wesentliche Steigerung der realen Kapazität der Batterie erreicht werden.

Die vorliegende Erfindung hat sich zur Aufgabe gestellt, ein Verfahren zur gezielten elektrochemischen Umsetzung in einer Batterie zu schaffen bzw. eine Batterie zu schaffen, die einen höheren Wirkungsgrad als herkömmliche Batterien aufweist. Das heißt, es soll bezogen auf die zum Laden verwendete Energie ein höherer Anteil zur gezielten Verwertung zur Verfügung stehen. Eine weitere Aufgabe der vorliegenden Erfindung besteht darin, daß bei höherer Arbeitsspannung während der Auflösung der metallischen abgeschiedenen Schichten möglichst gleichmäßige Schichten an der Elektrode während des Ladens erreicht werden.

Das erfindungsgemäße Verfahren zur gezielten elektrochemischen Umsetzung in einer Vielzahl von galvanischen Zellen, vorzugsweise mit bipolaren Elektroden einer wiederaufladbaren Batterie, insbesondere Zink-Brom-Batterie, mit zumindest zwei umlaufenden fluiden, insbesondere flüssigen, Elektrolyten, welche die Anoden- bzw. Kathodenräume zumindest teilweise während der gezielten elektrochemischen Umsetzung durchfließen, wobei vorzugsweise zwischen den gezielten elektrochemischen Umsetzungen die elektrische Verbindung zweiter Klasse zwischen den Zellenpaketen, Zellengruppen bzw. einzelnen Zellen über die Elektrolyten unterbrochen wird, besteht im wesentlichen darin, daß mit mehreren, vorzugsweise in Serie geschalteten Zellen aufgebaute Zellenpakete und/oder Teile derselben, zumindest teilweise während des Ladens parallel und zumindest teilweise während des Entladens in Serie umgeschaltet werden. Durch diese an sich durchaus einfache Maßnahme kann während des Ladens mit einer Stromquelle relativ niedriger Spannung gearbeitet werden, wobei dann die vagabundierenden Ströme durch die Elektrolytzu- und ableitungen aufgrund der niedrigen Spannungen, insbesondere bis ca. 36 Volt, besonders niedrig gehalten werden können. Es wird somit beim Laden weniger Strom verbraucht, wohingegen während der Entladezeiten mit hohen Spannungen und daher auch mit einem höheren Wirkungsgrad, beispielsweise bei Motoren gearbeitet werden kann. Berücksichtigt man, daß die Ladezeiten in der Regel größer sind, als die Entladezeiten kann damit eine wesentliche Steigerung des Wirkungsgrades erreicht werden.

Wird der Anolyt und/oder Katolyt jeweils aus einem gemeinsamen Elektrolytbehälter für Anolyt bzw. Katolyt abgeleitet und zugeführt, so wird für eine gleichmäßige gemeinsame Ladung bzw. Entladung der Zellen Sorge getragen, da in den Zellen ein Elektrolyt derselben Konzentration und auch derselben Leitfähigkeit vorliegt, sodaß bei geometrisch gleichen Zellen eine gleichmäßlige gezielte elektrochemische Umsetzung ermöglicht werden kann.

Ein weiterer Faktor zur gleichmäßigen gezielten elektrochemischen Umsetzung in den einzelnen Zellen bzw. Zellenpaketen ist dann gewährleistet, wenn gleiche Anteile des Anolyten und/oder Katolyten jeweils vor der Zuleitung, Zu- und/oder nach der Ableitung aus den Elektrodenräumen über einen oder mehrere Wärmetauscher geführt werden. Durch diese Maßnahme ist auch für eine gleichmäßige Temperatur und damit Wirkungsgrad der einzelnen Zellen besonders vorteilhaft Sorge getragen. Wie bekannt, ist insbesondere die Temperatur bei chemischen Umsetzungen von besonders großer Bedeutung für die Geschwindigkeit dieser Umsetzung.

Eine besonders gleichmäßige Versorgung der Zellen, der Zellenpakete und/oder Teile derselben mit der Elektrolytflüssigkeit kann dann erreicht werden, wenn diese parallel geschaltet versorgt werden, da dann sowohl die Konzentration im wesentlichen auch die Strömungsgeschwindigkeit und auch andere Variable besonders leicht in allen Zellen gleichgehalten werden können.

Wird vor der elektrischen Umschaltung parallel bzw. in Serie die elektrische Verbindung mit der Spannungsquelle bzw. dem Verbraucher unterbrochen, so kann eine besonders hohe Lebensdauer sowohl der Batterie, als auch des Schaltelementes erreicht werden.

Wird die Umschaltung von Serie in parallel in einem Fahrzeug durch eine große Verzögerung der Fahrzeugsgeschwindigkeit ausgelöst, so kann im Fahrzeug mit besonders hohen Spannungen gearbeitet werden, wobei gleichzeitig bei einem allenfalls auftretenden Unfall die Spannung der Batterie soweit gesenkt werden kann, daß keine ernstliche Gefährdung von Lebewesen durch zu hohe Spannungen bedingt sein können.

Die erfindungsgemäße wiederaufladbare Batterie, insbesondere Zink-Brom-Batterie, mit umlaufenden Elektrolyten einer Vielzahl von Zellen mit semipermeablen Separatoren und insbesondere bipolaren Elektroden, die mit Kunststoff gebundenem Kohlenstoff aufgebaut sind und an ihren jeweiligen Enden der Zellenpakete elektrische Ableiter erster Klasse aufweisen, besteht im wesentlichen darin, daß zwischen den elektrischen Ableitern weitere vorgesehen sind, wobei Umschalter vorzugsweise auf Halbleiterbasis zum Umschalten der elektrischen Untereinheiten, die jeweils zwischen zwei elektrischen Ableitern gebildet sind, von parallel auf Serie vorgesehen sind. Mit einer derartigen Batterie können besonders einfach und platzsparend die erfindungsgemäßen Aufgaben gelöst werden, sodaß während des Ladens eine besonders gleichmäßige Abscheidung des metallischen Filmes erreicht werden kann, wobei gleichzeitig zum Laden weniger elektrische Energie, da geringere vagabundierende Ströme vorliegen, aufgewendet werden muß. Während des Entladevorganges kann hingegen mit höheren Spannungen gearbeitet werden, sodaß beispielsweise die Traktion eines Fahrzeuges mit einem Elektromotor mit höherer Spannung und damit mit besserem Wirkungsgrad durchgeführt werden kann.

Sind die Zellen der Zellenpakete und die Zellen der Zellenpakete mit jeweils zwei elektrischen Ableitern und die Zellenpakete untereinander mit den Elektrolytleitungen parallel geschaltet verbunden, so kann eine einheitlich Versorgung der Zellen der Zellenpakete mit einem Elektrolyten einer Konzentration und einer elektrochemischen Leitfähigkeit sichergestellt sein.

Sind in den gemeinsamen Elektrolytzu- und/oder ableitungen jeweils Wärmetauscher vorgesehen, so kann auch eine temperaturmäßige exakte Steuerung erreicht werden, sodaß beispielsweise thermische Belastungen der mit Kunststoffteilen aufgebauten Batterie, aber auch ungewünschte hohe bzw. niedrige Reaktionsgeschwindigkeiten vermieden werden können.

Im folgenden wird die Erfindung anhand der Zeichnungen näher erläutert.

Es zeigen :

Fig. 1 eine Batterie mit mehreren Zellenpaketen,

Fig. 2 einen Schaltplan der Batterie gemäß Fig. 1 und

Fig. 3 das hydraulische Schaltschema für einen Elektrolytkreislauf.

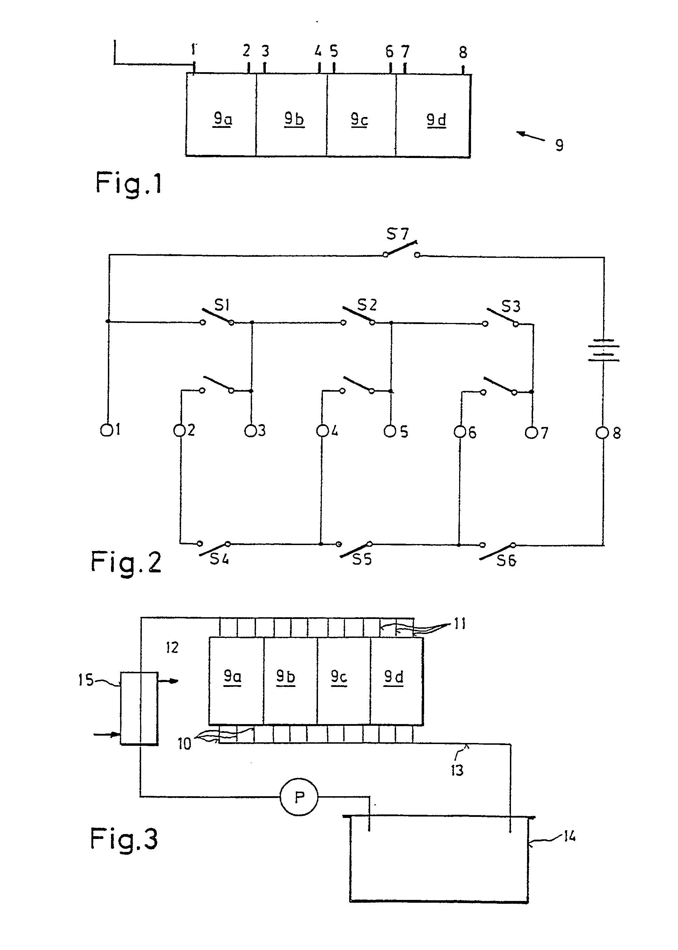

Die in Fig. 1 dargestellte Batterie 9 ist mit mehreren Zellenpaketen 9a, b, c, d aufgebaut. Jedes Zellenpaket weist eigene elektrische Ableiter, sogenannte Kollektoren 1 bis 8, auf. Die Batterie ist eine Zink-Brom-Batterie mit einem umlaufenden Elektrolytsystem. Die bipolaren Elektroden bestehen aus mit Kunststoff gebundenen Kohlenstoff, wobei ein äußerer Rand der Elektroden nicht elektrisch leitfähig ist, sondern aus einem angeformten Rand aus Kunststoff ohne leitenden Füllstoff besteht. Die Elektrodenräume werden jeweils zwischen den Elektroden und den anschließenden semipermeablen Diaphragmen gebildet, wobei der Abstand zwischen Elektroden und Diaphragma durch periphere Verdickungen am Diaphragma bzw. auf der Elektrode gebildet werden. Die Ränder der Elektroden und Separatoren bzw. Diaphragmen sind an ihren Stirnseiten durch Auftragen eines thermoplastischen Kunststoffes miteinander verschweißt. Bei den jeweiligen elektrischen Ableitungen sind die Elektroden mit einem metallischen Gitter zur Ableitung bzw. Zuleitung des Stromes versehen.

Das Elektrolytsystem ist mit zwei verschiedenen Elektrolyten aufgebaut, die jeweils Zinkbromid und Leitfähigkeitssalze aufweisen. Während des Ladens wird einerseits Zink an der bipolaren Elektrode abgeschieden, wobei auf der anderen Seite der bipolaren Elektrode elementares Brom zur Abscheidung gelangt. Da dieses Brom nicht in ausreichender Menge an der Elektrode abgelagert werden kann, wird dasselbe mit einem Komplexbildner, z. B. Morpholinderivat, gebunden. Der sodann entstehende Komplex ist in der wäßrigen Phase des Elektrolyten nicht mehr hoch, sondern nur gering löslich und da schwerer als Wasser, sammelt er sich im Elektrolytbehälter während des Ladens an. Während des Entladens wird sowohl wäßrige Elektrolytflüssigkeit als auch gegebenenfalls der abgeschiedene Komplex in Umlauf gebracht, wodurch die Bromaktivität in der galvanischen Zelle hochgehalten werden kann.

Die theoretische Spannung eines Zink-Brom-Elementes beträgt 1,83 Volt.

Bei dem in Fig. 2 dargestellten Schaltschema, das beispielsweise durch ein Schaltelement auf Halbleiterbasis verwirklicht werden kann, können die einzelnen Zellenpakete der Batterie entweder durch Schließen der Schalter S 1, S 2 und S 3 in Serie oder durch Schließen der Schalter S 4, S 5 und S 6 parallel geschaltet werden, wobei jeweils die elektrischen Ableitungen 1 bis 8 entsprechend dieser Schaltungen miteinander verbunden werden. Wenn ein lastfreies Schalten, d. h. Umschalten von Serie auf parallel bzw. umgekehrt erwünscht ist, kann noch ein Hauptschalter S 7 geöffnet bzw. geschlossen werden. Ein derartiger Schalter zum Umschalten von parallel auf Serie bzw. umgekehrt, kann auch mit einem Verzögerungssensor versehen sein, daß die Serienschaltung auf Parallelschaltung umgestellt wird, um bei extremen Verzögerungen von Fahrzeugen eine niedrigere Spannung und damit geringere Unfallsgefahr bei fahrzeugen zu erlauben. In bestimmten Fällen kann es erwünscht sein, daß alle Zellen einer Batterie parallel bzw. anschließend in Serie umschaltbar sind.

Es kann auch erwünscht sein, daß einzelne Zellenpakete in Serie miteinander geschaltet werden und diese so erhaltenen Einheiten sodann untereinander wieder parallel geschaltet werden. Auch die umgekehrte Schaltungsanordnung ist für bestimmte Einsatzzwecke von Vorteil.

In Fig. 3 ist das hydraulische Fließschema der Batterie 9 dargestellt, wobei die Zellenpakete 9a, 9b, 9c und 9d von der Elektrolytflüssigkeit über Einzelzu- bzw. ableitungen 10 und 11 von den Elektrolytzu- und ableitungen 12, 13 versorgt werden. Der Elektrolytkreislauf geht nun so vor sich, daß der im Behälter 14 gespeicherte Elektrolyt über die Pumpe P, dem Wärmetauscher 15 über die Einzelzuleitungen 11 den Elektrodenräumen zugeführt wird und über die Einzelableitungen 10 sodann aus diesen Räumen abgeleitet und über die Ableitung 13 dem Elektrolytbehälter 14 wieder zugeführt wird. Durch diese Vorgangsweise wird einerseits eine vollkommen homogene Zusammensetzung der Elektrolytflüssigkeit in den einzelnen Elektrodenräumen gewährleistet. Weiters kann über den Wärmetauscher eine Temperierung durchgeführt werden, wobei auch hier die gleichmäßige Temperatur in den einzelnen Elektrodenräumen sichergestellt ist, wobei weiters große Druckdifferenzen zwischen den einzelnen Elektrodenräumen auch vermeidbar sind.

Mehrere Zellenpakete mit einer gemeinsamen Elektrolytanspeisung, u. zw. sowohl Anolyt als auch Katolyt, wurden entsprechend dem Schaltungsschemata gemäß Fig. 2 so geschalten, daß die Ladung mit einer Ladespannung gemäß Tabelle durchgeführt wurde. Wie man den Werten der Tabelle entnehmen kann, ist der Gesamtaufwand an elektrischer Energie umso größer, je größer die Ladespannung ist, wobei das Ansteigen des Energieverbrauches nicht linear, sondern nahezu exponential zu bezeichnen ist. Die Ursache hiefür liegt darin, daß die vagabundierenden Ströme mit ansteigender Spannung besonders hoch werden.

Je nach gewünschter Verbraucherspannung können sodann die Zellenpakete entsprechend geschalten werden. Zur Vermeidung von vagabundierenden Strömen während der Stillstandzeiten kann beispielsweise ein Hahn gemäß der EU A1 168 377 in den Elektrolytsystemen vorgesehen werden, wobei damit die elektrische Leitung zweiter Klasse während der Stillstandzeiten zwischen den einzelnen Elektrodenräumen unterbunden wird.

## T A B E L L E

| Batterie | 1 | 2 | 3 | 4 | 5 |
|---|---|---|---|---|---|
| Nominalspannung V | 24 | 36 | 48 | 96 | 192 |
| Geladene Ah | 100 | 100 | 100 | 100 | 100 |
| Entnehmbare Ah | 93 | 93 | 91 | 87 | 81 |

## Ansprüche

1. Verfahren zur gezielten elektrochemischen Umsetzung in einer Vielzahl von galvanischen Zellen, vorzugsweise mit bipolaren Elektroden einer wiederaufladbaren Batterie, insbesondere Zink-Brom-Batterie, mit zumindest zwei umlaufenden fluiden, insbesondere flüssigen, Elektrolyten, welche die Anoden- bzw. Katodenräume, zumindest zeitweise, während der gezielten elektrochemischen Umsetzung durchfließen, wobei vorzugsweise zwischen den gezielten elektrochemischen Umsetzungen die elektrische Verbindung zweiter Klasse zwischen Zellenpaketen, Zellengruppen bzw. einzelnen Zellen über die Elektrolyten unterbrochen wird, dadurch gekennzeichnet, daß mit mehreren, vorzugsweise in Serie geschalteten, Zellen aufgebaute Zellenpakete und/oder Teile derselben, zumindest teilweise während des Ladens parallel und zumindest während des Entladens in Serie umgeschaltet werden.

2. Verfahren nach Anspruch 1, dadurch gekennzeichnet, daß der Anolyt und/oder Katolyt jeweils aus einem gemeinsamen Elektrolytbehälter für Anolyt bzw. Katolyt abgeleitet und zugeführt wird.

3. Verfahren nach Anspruch 1 oder 2, dadurch gekennzeichnet, daß gleiche Anteile des Anolyten und/oder des Katolyten jeweils vor der Zuleitung zu und/oder nach der Ableitung aus den Elektrodenräumen über einen oder mehrere Wärmetauscher geführt werden.

4. Verfahren nach Anspruch 1, 2 oder 3, dadurch gekennzeichnet, daß die Zellen der Zellenpakete und/oder Teile derselben mit den Elektrolytflüssigkeiten parallel geschaltet versorgt werden.

5. Verfahren nach einem der Ansprüche 1 bis 4, dadurch gekennzeichnet, daß vor der elektrischen Umschaltung parallel bzw. in Serie die elektrische Verbindung mit der Spannungsquelle bzw. dem Verbraucher unterbrochen wird.

6. Verfahren nach einem der Ansprüche 1 bis 5, dadurch gekennzeichnet, daß die Umschaltung in einem Fahrzeug durch große Verzögerung der Fahrzeuggeschwindigkeit ausgelöst wird.

7. Wiederaufladbare Batterie, insbesondere Zink-Brom-Batterie, mit umlaufenden Elektrolyten, insbesondere zur Durchführung des Verfahrens nach einem der Ansprüche 1 bis 6 mit einer Vielzahl von Zellen mit semipermeablen Separatoren und insbesondere bipolaren Elektroden, die mit Kunststoff gebundenen Kohlenstoff aufgebaut sind und an ihren jeweiligen Enden der Zellenpakete elektrische Ableiter erster Klasse aufweisen, dadurch gekennzeichnet, daß zwischen dem elektrischen Ableiter (1, 8) weitere (2, 3, 4, 5, 6, 7) vorgesehen sind, wobei Umschalter (Fig. 2), vorzugsweise auf Halbleiterbasis, zum Umschalten der elektrischen Untereinheiten, die jeweils zwischen zwei elektrischen Ableitern gebildet sind, von parallel auf Serie vorgesehen sind.

8. Wiederaufladbare Batterie nach Anspruch 7, dadurch gekennzeichnet, daß die Zellen der Zellenpakete (9a, 9b, 9c, 9d) und die Zellen mit jeweils zwei elektrischen Ableitern mit den Elektrolytzu- und ableitungen (12, 13) parallel geschaltet verbunden sind.

9. Wiederaufladbare Batterie nach Anspruch 7 oder 8, dadurch gekennzeichnet, daß in dem gemeinsamen Elektrolytzu- und/oder ableitungen (12, 13) jeweils Wärmetauscher (15) vorgesehen sind.

Fig.1

Fig.2

Fig.3